Europäisches Patentamt

European Patent Office

Office européen des brevets

(19)

(11) Veröffentlichungsnummer : **0 239 679**
**B1**

(12)

# EUROPÄISCHE PATENTSCHRIFT

(45) Veröffentlichungstag der Patentschrift :
07.09.88

(51) Int. Cl.⁴ : **G 01 F   1/80**

(21) Anmeldenummer : 86200575.8

(22) Anmeldetag : 04.04.86

(54) **Massendurchflussmessgerät für strömende Medien mit Einrichtungen zur Ermittlung der Corioliskraft.**

(43) Veröffentlichungstag der Anmeldung :
07.10.87 Patentblatt 87/41

(45) Bekanntmachung des Hinweises auf die Patenterteilung : 07.09.88 Patentblatt 88/36

(84) Benannte Vertragsstaaten :
DE FR GB IT

(56) Entgegenhaltungen :
EP-A- 0 109 218
WO-A-86 /006 99
FR-A- 2 394 065
GB-A- 2 167 858

(73) Patentinhaber : KROHNE MESSTECHNIK GMBH &
CO. KG
Ludwig-Krohne-Strasse 5
D-4100 Duisburg 1 (DE)

(72) Erfinder : Kiehl, Werner, Dr.-Ing.
Theodor-Fontane-Strasse 55
D-7410 Reutlingen (DE)
Erfinder : Rotthaus, Dirk, Dr.-Ing.
In der Uhlenflucht 3
D-4630 Bochum (DE)
Erfinder : Owen, Stephen MA
8 Hillside
Royston/Hertfordshire (GB)

(74) Vertreter : Gesthuysen, Hans Dieter, Dipl.-Ing.
Patentanwälte Gesthuysen + von Rohr Huyssenallee
15 Postfach 10 13 33
D-4300 Essen 1 (DE)

EP 0 239 679 B1

## Beschreibung

Die Erfindung betrifft ein Massendurchflußmeßgerät für strömende Medien mit Einrichtungen zur Ermittlung der Corioliskraft, welches aus zwei Rohrschleifen besteht, die in einer etwa parallelen Lage mit ihren Enden an einem mit Strömungskanälen und Anschlußöffnungen für die zwei Rohrschleifen und für ein Zufluß- und ein Abflußrohr versehenen Anschlußblock befestigt sind und zwischen deren beiden Schwingungsenden ein Schwingungserzeuger angeordnet ist und die mit ihre Torsionsschwingungen messenden Sensoren versehen sind.

Bei einem beispielsweise aus der DE-PS-2 822 087 bekannten Massendurchflußmeßgerät sind die Enden der beiden Rohrschleifen parallel nebeneinanderliegend an nur einer Fläche des Anschlußblocks angebracht und die vier zugehörigen Strömungskanäle laufen parallel zu der gegenüberliegenden Fläche, an der ein Zufluß- und ein Abflußrohr sowie ein Verbindungsrohr angeordnet sind. Bei einer solchen Ausführung sind die Rohrschleifen zur Bildung ausreichend · großer Hebelarme in einer aufwendigen Weise seitlich ausgebogen. Durch die einseitige Einspannung besteht außerdem der Nachteil einer großen Baulänge. Die parallel geführten Zu- und Abflußrohre lassen sich nur mit Hilfe von Rohrkrümmern in eine linear verlaufende Rohrleitung einbauen. Zwar ist in der DE-PS-2 822 087 auch eine Ausführung mit einer loopingartigen Rohrschleife bekannt, deren in einer Fluchtlinie voneinander weggeführte Enden in den Schenkeln eines U-fömigen Anschlußblocks eingespannt sind. Der Anschlußblock ist aber sehr breit, und für eine serielle Durchströmung von zwei parallel angeordneten Rohrschleifen ist eine sehr lange Ruckführleitung vom Ausflußende der einen . Rohrschleife zum Einlaufende der anderen Rohrschleife erforderlich. Bei beiden vorbekannten Ausführungen führt die Lage der Einspannstellen der Rohrschleifen beim Schwingen zu starken mechanischen Beanspruchungen bis hin zum Bruch.

Demgegenüber liegt der Erfindung die Aufgabe zugrunde, ein Massendurchflußmeßgerät der gattungsgemäßen Art mit einem verbesserten Anschluß der Rohrschleifen und Anschlußrohre am Anschlußblock zu versehen.

Diese Aufgabe wird erfindungsgemäß dadurch gelöst, daß die Enden jeder Rohrschleife und die Anschlußöffnungen für das Zufluß- und das Abflußrohr jeweils in einer fluchtenden Linie an zwei gegenüberliegenden Flächen des Anschlußblocks angeordnet sind und beide Rohrschleifen durch die Strömungskanäle seriell oder parallel mit den ihnen zugeordneten Anschlußöffnungen verbunden sind.

Die neue Anordnung der Rohrschleifen und des Zu- und des Abflußrohres hat zunächst den Vorteil, daß das Gerät wesentlich kompakter ist. Die Rohrschleifen haben einen einfachen Aufbau mit einem großen Hebelarm, ohne daß hierfür beson

dere Ausbiegungen erforderlich sind. Die Anbringung der Rohrschleifenenden an gegenüberliegenden Enden führt auch zu einer günstigeren Aufnahme der durch das Schwingen verursachten mechanischen Kräfte. Weiterhin läßt sich das Gerät gut in linear verlaufende Rohrleitungen einbauen. Der Anschlußblock läßt sich bedarfsweise für eine serielle oder eine parallele Durchströmung der beiden Rohrschleifen ausbilden, wofür lediglich die Strömungskanäle im Anschlußblock entsprechend geführt sein müssen ; bedarfsweise läßt sich das Meßgerät durch einen Austausch des Anschlußblocks von der einen Strömungsart auf die andere umrüsten.

Für einen besonders kompakten Aufbau liegt die Fluchtlinie der Anschlußöffnungen für das Zufluß- und Abflußrohr in einer parallel zwischen den beiden Rohrschleifen verlaufenden Ebene, so daß eine symmetrische Anordnung erhalten wird. Dabei kann wahlweise die Fluchtlinie der Anschlußöffnungen und der Zu- und Abflußrohre zwischen oder außerhalb der beiden Rohrschleifen liegen. Alternativ besteht auch die Möglichkeit, die Anschlußöffnungen für das Zufluß- und das Abflußrohr so anzuordnen, daß deren Fluchtlinie rechtwinklig zu den von den Rohrschleifen gebildeten Flächen verläuft. Auch der Einbau des Massendurchflußgerätes in eine Rohrleitung läßt sich variieren. Bei einer Ausführung sind das Zufluß- und das Abflußrohr am Anschlußblock angeschweißt und mit Anschlußflanschen versehen, die an den entsprechenden Anschlußflanschen der Rohrleitung zu befestigen sind. Bei einer flanschlosen Ausführung ist der Anschlußblock mit Durchsteckbohrungen für Spannbolzen zur Befestigung an Anschlußflanschen der Rohrleitung versehen, wobei die Durchsteckbohrungen parallel zur Fluchtlinie zwischen den beiden Anschlußöffnungen verlaufen.

In der Zeichnung sind mehrere Ausführungsbeispiele dargestellt, es zeigt :

Fig. 1 ein Massendurchflußmeßgerät, dessen Zufluß- und Abflußrohr zwischen den Rohrschleifen angeordnet ist,

Fig. 2 einen Anschlußblock für ein Massendurchflußmeßgerät für eine serielle Durchströmung,

Fig. 3 einen Anschlußblock für ein Massendurchflußmeßgerät für eine parallele Durchströmung,

Fig. 4 den Anschlußblock eines Massendurchflußmeßgerätes, dessen Zu- und Abflußrohr außerhalb der beiden Rohrschleifen liegt,

Fig. 5 ein Massendurchflußmeßgerät, welches zwischen den Anschlußflanschen einer Rohrleitung einspannbar ist und

Fig. 6 ein Massendurchflußmeßgerät mit einer abgewandelten Anschlußlage des Zufluß- und Abflußrohres.

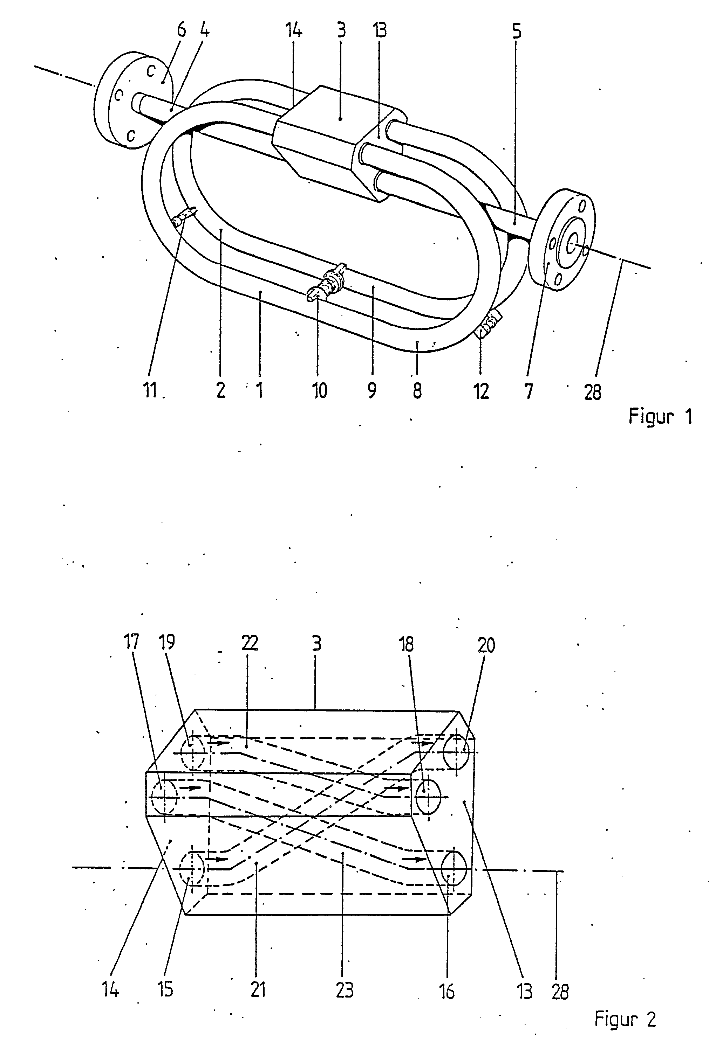

Das in Fig. 1 dargestellten Massendurchflußmeßgerätes besteht aus zwei etwa oval gebogenen Rohrschleifen 1, 2, deren Enden jeweils in einer fluchtenden Linie gegeneinander gerichtet sind und in einer parallelen Lage an einem Anschlußblock 3 angeschweißt sind. Am Anschlußblock 3 sind weiterhin ein Zuflußrohr 4 und ein Abflußrohr 5 angeschweißt, die zum Anschluß an eine Rohrleitung mit Anschlußflanschen 6, 7 versehen sind. Zwischen den in Fig. 1 nach unten gerichteten Schwingungsenden 8, 9 ist ein Schwingungserzeuger 10, z. B. ein Elektromagnet, angeordnet, der beide Rohrschleifen 1, 2 in Schwingung versetzt. Außerdem sind die beiden Rohrschleifen 1,2 an ihren seitlichen Rohrabschnitten mit Sensoren 11, 12 versehen.

Der Anschlußblock 3 hat, wie in Fig. 2 schematisch angedeutet ist, eine prismatische Form und ist an den einander gegenüberliegenden parallelen Flächen 13,14 mit Anschlußöffnungen 15 bis 20 versehen, die durch drei Strömungskanäle 21 bis 23 verbunden sind. Die Anschlußöffnungen 15, 16 für das Zuflußrohr 4 und das Abflußrohr 5 sind in einer fluchtenen Linie angeordnet, d. h. verlaufen in einer Achse bzw. Fluchtlinie 28. Ebenso liegen die Anschlußöffnungen 17, 18 bzw. 19, 20 für die Rohrschleifen 1, 2 jeweils in einer fluchtenden Linie, parallel zur Fluchtlinie 28. Die Anschlußöffnungen 17, 19 und 18, 20 liegen mit etwas Abstand nebeneinander, während die Anschlußöffnungen 15 und 16 jeweils darunter in einer mittleren Lage, also in einer parallel zwischen den beiden Rohrschleifen 1, 2 verlaufenden Ebene liegen. Für eine serielle Durchströmung der Rohrschleifen 1, 2 sind die Anschlußöffnungen 15 bis 20 auf folgende Weise durch drei Strömungskanäle 21 bis 23 verbunden : der erste Strömungskanal 21 verbindet die Anschlußöffnung 15 für das Zuflußrohr 4 mit der Anschlußöffnung 20, an welche das Einlaufende der Rohrschleife 2 anschließt ;, die Anschlußöffnung 19, in welche das Auslaufende der Rohrschleife 2 mündet, ist durch den zweiten Strömungskanal 22 mit der Anschlußöffnung 18 verbunden, an welche das Einlaufende der Rohrschleife 1 anschließt, ; schließlich verbindet der dritte Strömungskanal 23 die Anschlußöffnung 17, in welche das Auslaufende der Rohrschleife 1 mündet, mit der Anschlußöffnung 16, an welche das Abflußrohr 5 anschließt.

Für die Massendurchflußmessung wird das von einem flüssigen oder gasförmigen Medium durchströmte Gerät in Schwingungen versetzt. Die durch Corioliskräfte erzeugten Drehmomente werden in bekannter Weise mit Hilfe der Sensoren 11, 12 gemessen und dienen als Maß für den Massendurchfluß.

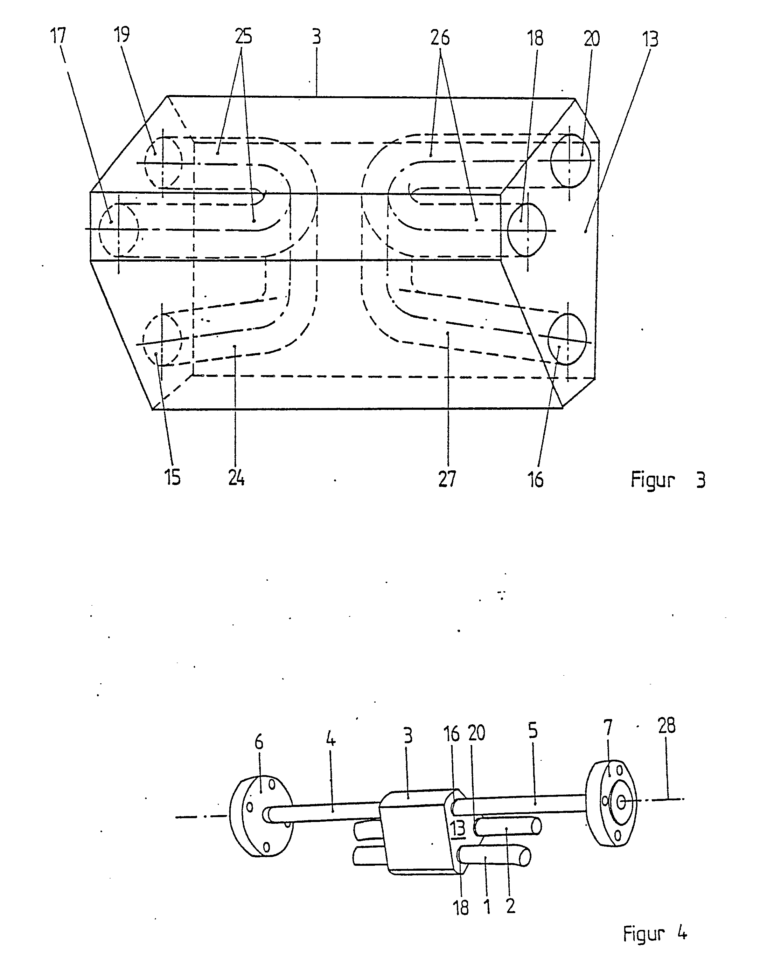

Bei dem in Fig. 3 dargestellten Anschlußblock 3 sind die Anschlußöffnungen 15 bis 20 durch Strömungskanäle 24 bis 27 für eine parallele Durchströmung der Rohrschleifen 1, 2 verbunden. Die Anschlußöffnung 15 für das Zuflußrohr 4 ist über Strömungskanäle 24, 25 mit der darüberliegenden Anschlußöffnungen 17, 19 verbunden, an welche die Einlaufenden der beiden Rohrschleifen 1, 2 anschließen. Die gegenüberliegenden Anschlußöffnungen 18, 20 in welche in diesem Beispiel die Auslaufenden der Rohrschleifen 1, 2 münden, sind in entsprechender Weise über Strömungskanäle 26, 27 mit der darunterliegenden Anschlußöffnung 16 verbunden, an welche das Abflußrohr 5 anschließt.

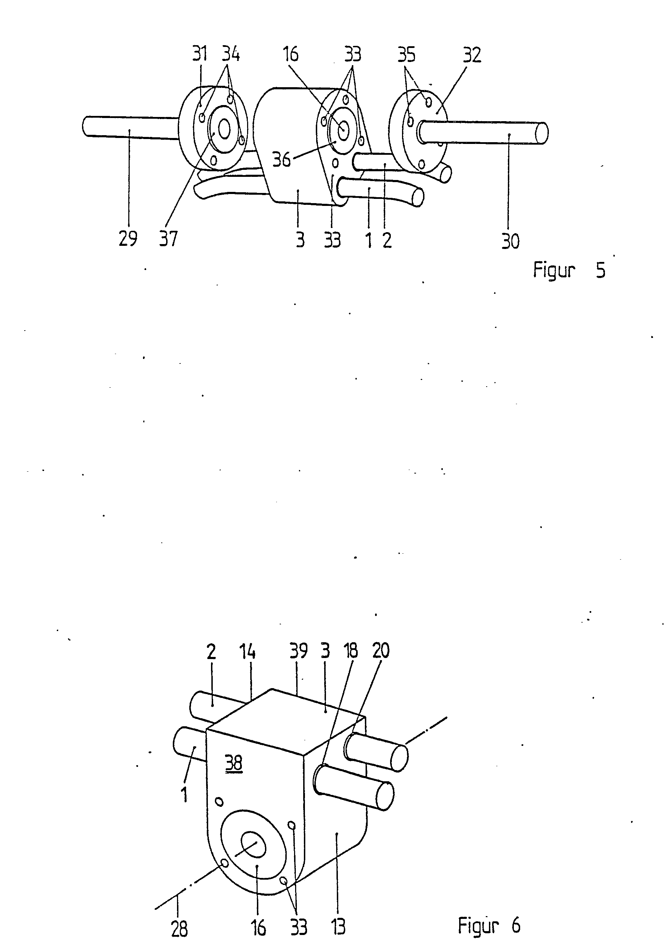

Während bei der Ausführung nach Fig. 1 das Zufluß- und das Abflußrohr 4, 5 innerhalb des von den Rohrschleifen 1, 2 begrenzten Raumes liegen, sind sie bei der Ausführung nach Fig. 4 außerhalb dieses Raumes angeordnet. Erreicht wird dies durch einfaches Umdrehen des Anschlußblocks 3 und eine entsprechende Befestigung der Rohrschleifen 1, 2 und des Zufluß- und Abflußrohres 4, 5.

Bei dem in Fig. 5 dargestellten flanschlosen Massendurchflußmeßgerät sind die Anschlußöffnungen 15 und 16 mit Dichtungsringen 36 versehen. Die mit Anschlußflanschen 31, 32 ausgerüsteten Rohrabschnitte 29, 30 einer Rohrleitung werden unter Zwischenlage von Dichtungsringen 37 gegen die Anschlußöffnungen 15, 16 gelegt und verspannt. Zur Verspannung sind im Anschlußblock 3 Durchsteckbohrungen 33 für Spannbolzen vorgesehen. Diese Durchsteckbohrungen 33 liegen fluchtend zu Bohrungen 34, 35 in den Anschlußflanschen 31, 32 der Rohrabschnitte 29, 30. Während bei den Ausführungen nach den Fig. 1 bis 5 die Fluchtlinien aller Anschlußöffnungen 15 bis 20 parallel verlaufen, zeigt Fig. 6 eine Ausführung, bei der die Fluchtlinie 28 der Anschlußöffnungen 15, 16 für das Zufluß- und Abflußrohr 4, 5 rechtwinklig zu den Fluchtlinien der Rohrschleifen 1, 2 bzw. den von den Rohrschleifen 1, 2 umfaßten Flächen verläuft. Auch die Durchsteckbohrungen 33 verlaufen parallel zu der Fluchtlinie 28. Die Flächen 38, 39, an denen das Zufluß- bzw. Abflußrohr ansetzt, liegen ebenfalls rechtwinklig zu dem Flächenpaar 13, 14.

## Patentansprüche

1. Massendurchflußmeßgerät für strömende Medien mit Einrichtungen zur Ermittlung der Corioliskraft, bestehend aus zwei Rohrschleifen (1, 2), die in einer etwa parallelen Lage mit ihren Enden an einem mit Strömungskanälen (21 bis 23 bzw. 24 bis 27) und Anschlußöffnungen (15 bis 20) für die zwei Rohrschleifen und für ein Zufluß- und ein Abflußrohr (4, 5) versehenen Anschlußblock (3) befestigt sind und zwischen deren beiden Schwingungsenden (8, 9) ein Schwingungserzeuger (10) angeordnet ist und die mit ihre Torsionsschwingungen messenden Sensoren (11, 12) versehen sind, dadurch gekennzeichnet, daß die Enden jeder Rohrschleife (1, 2) und die Anschlußöffnungen (15, 16) für das Zufluß- und das Abluß-rohr (4, 5) jeweils in einer fluchtenden Linie an zwei gegenüberliegenden Flächen (13, 14 bzw. 38, 39) des Anschlußblocks (3) angeordnet sind und beide Rohrschleifen (1, 2) durch die Strömungskanäle (21 bis 23 bzw. 24 bis 27) seriell oder parallel mit den ihnen zugeordneten Anschlußöffnungen (17 bis 20) verbunden sind.

2. Massendurchflußmeßgerät nach Anspruch 1, dadurch gekennzeichnet, daß die Fluchtlinie (28) der Anschlußöffnungen (15, 16) für das Zufluß- und das Abflußrohr (4, 5) in einer parallel zu und zwischen den beiden Rohrschleifen (1, 2) verlaufenden Ebene liegt.

3. Massendurchflußmeßgerät nach Anspruch 2, dadurch gekennzeichnet, daß die Fluchtlinie (28) der Anschlußöffnungen (15, 16) sowie des Zufluß- und des Abflußrohres (4, 5) zwischen den beiden Rohrschleifen (1, 2) liegt.

4. Massendurchflußmeßgerät nach Anspruch 2, dadurch gekennzeichnet, daß die Fluchtlinie (28) der Anschlußöffnungen (15, 16) außerhalb der beiden Rohrschleifen (1, 2) liegt.

5. Massendurchflußmeßgerät nach Anspruch 1, dadurch gekennzeichnet, daß die Fluchtlinie (28) der Anschlußöffnungen (15, 16) für das Zufluß- und das Abflußrohr (4, 5) rechtwinklig zu den von den Rohrschleifen (1, 2) gebildeten Flächen verläuft.

6. Massendurchflußmeßgerät nach einem der Ansprüche 1 bis 5, dadurch gekennzeichnet, daß das Zufluß- und das Abflußrohr (4, 5) am Anschlußblock (3) angeschweißt und an ihren Enden mit Flanschen (6, 7) versehen sind.

7. Massendurchflußmeßgerät nach einem der Ansprüche 1 bis 5, dadurch gekennzeichnet, daß der Anschlußblock (3) mit Durchsteckbohrungen (33) für Spannbolzen zur Befestigung an Anschlußflanschen (31, 32) der Rohrabschnitte (29, 30) versehen ist, wobei die Durchsteckbohrungen (33) parallel zu der Fluchtlinie zwischen den Anschlußöffnungen (15, 16) verlaufen.

## Claims

1. A mass flowmeter for flowing media with equipment for the determination of the Coriolis force, consisting of two loops of tubing (1, 2) that in approximately parallel position are fastened by their ends into a connecting block (3) provided with flow channels (21 to 23 or 24 to 27) and connection apertures (15 to 20) for the two loops of tubing and for an inflow and an outflow tube (4, 5), an oscillation generator (10) being located between their two oscillating ends (8, 9), and they are provided with sensors (11, 12) that measure their torsional oscillations, characterized in that each of the ends of each loop of tubing (1, 2) and the connection apertures (15, 16) for the inflow tube (4) and the outflow tube (5) are arranged in a straight line on the two opposite faces (13, 14 or 38, 39) of the connecting block (3), and both the loops of tubing (1, 2) are connected in series or in parallel through the flow channels (21 to 23 or 24 to 27) by the connection apertures (17 to 20) associated with them.

2. A mass flowmeter according to Claim 1, characterized in that the alignment (28) of the connection apertures (15, 16) for the inflow and outflow tube (4, 5) lies in a plane that extends parallel to and between the two loops of tubing (1, 2).

3. A mass flowmeter according to Claim 2, characterized in that the alignment (28) of the connection apertures (15, 16) and of the inflow and outflow tube (4, 5) lies between the two loops of tubing (1, 2).

4. A mass flowmeter according to Claim 2, characterized in that the alignment (28) of the connection apertures (15, 16) lies outside the two loops of tubing (1, 2).

5. A mass flowmeter according to Claim 1, characterized in that the alignment (28) of the connection apertures (15, 16) for the inflow and the outflow tube (4, 5) is at right angles to the surface formed by the loops of tubing (1, 2).

6. A mass flowmeter according to one of Claims 1 to 5, characterized in that the inflow and the outflow tube (4, 5) are welded to the connecting block (3) and are provided with flanges (6, 7) at their ends.

7. A mass flowmeter according to one of Claims 1 to 5, characterized in that the connecting block (3) is provided with through holes (33) for the insertion of bolts to tighten up to connection flanges (31, 32) of lengths of pipe (29, 30), these holes (33) running parallel to the alignment between the connection apertures (15, 16).

## Revendications

1. Débitmètre massique pour des fluides en écoulement comportant des dispositifs pour déterminer la force de Coriolis et constitué par deux boucles tubulaires (1, 2), qui sont fixées par leurs extrémités, dans des positions approximativement parallèles, à un bloc de raccordement (3) comportant des canaux d'écoulement (21 à 23 ou 24 à 27) et des ouvertures de raccordement (15 à 20) pour les deux boucles tubulaires et un tube d'arrivée et un tube de départ (4, 5), et entre les deux extrémités oscillantes (8, 9) desquelles se trouve disposé un générateur d'oscillations (10), et qui sont équipées de capteurs (11, 12) mesurant les oscillations de torsion de ces extrémités, caractérisé en ce que les extrémités de chaque boucle tubulaire (1, 2) et les ouvertures de raccordement (15, 16) pour le tube d'arrivée et le tube de départ (4, 5) sont disposées respectivement sur une droite d'alignement, en étant situées sur deux surfaces opposées (13, 14 ou 38, 39) du bloc de raccordement (3), et les deux boucles tubulaires (1, 2) sont reliées par les canaux d'écoulement (21 à 23 ou 24 à 25), en série ou en parallèle, aux ouvertures de raccordement (17 à 20) qui leur sont associées.

2. Débitmètre massique selon la revendication 1, caractérisé en ce que la droite d'alignement (28) des ouvertures de raccordement (15, 16) pour le tube d'arrivée et le tube de départ (4, 5) est située dans un plan qui est parallèle aux deux boucles tubulaires (1, 2) et est situé entre ces dernières.

3. Débitmètre massique selon la revendication 2, caractérisé en ce que la droite d'alignement (28) des ouvertures de raccordement (15, 16) ainsi que du tube d'arrivée et du tube de départ (4, 5) est située entre les deux boucles tubulaires (1, 2).

4. Débitmètre massique selon la revendication 2, caractérisé en ce que la droite d'alignement (28) des ouvertures de raccordement (15, 16) est située à l'extérieur des deux boucles tubulaires (1, 2).

5. Débitmètre massique selon la revendication 1, caractérisé en ce que la droite d'alignement (28) des ouvertures de raccordement (15, 16) pour le tube d'arrivée et le tube de départ (4, 5) est perpendiculaire aux surfaces formées par les boucles tubulaires (1, 2).

6. Débitmètre massique selon l'une des revendications 1 à 5, caractérisé en ce que le tube d'arrivée et le tube de départ (4, 5) sont soudés sur le bloc de raccordement (3) et comportent des brides (6, 7) au niveau de leurs extrémités.

7. Débitmètre massique selon l'une des revendications 1 à 5, caractérisé en ce que le bloc de raccordement (3) comporte des perçages d'enfichage (33) pour des boulons de serrage permettant la fixation sur des brides de raccordement (31, 32) des sections tubulaires (29, 30), les perçages d'enfichage (33) étant parallèles à la droite d'alignement située entre les ouvertures de raccordement (15, 16).

Figur 1

Figur 2

**Figur 3**

**Figur 4**

31 34    16    33    35    32

36

29  37        3  33  1 2        30

Figur   5

2  14    39  3  18  20

38

1

28    16  33  13    Figur  6